(19) **Europäisches Patentamt / European Patent Office / Office européen des brevets**

(11) **EP 4 632 443 A1**

(12) **EUROPEAN PATENT APPLICATION**
published in accordance with Art. 153(4) EPC

(43) Date of publication:
**15.10.2025 Bulletin 2025/42**

(21) Application number: **23900539.0**

(22) Date of filing: **29.11.2023**

(51) International Patent Classification (IPC):
**G02B 1/118** (2015.01)

(52) Cooperative Patent Classification (CPC):
**G02B 1/118**

(86) International application number:
**PCT/JP2023/042663**

(87) International publication number:
**WO 2024/122424 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 JP 2022194911**

(71) Applicant: **Dexerials Corporation
Shimotsuke-shi, Tochigi 323-0194 (JP)**

(72) Inventors:
• **ITO, Shunya
  Shimotsuke-shi, Tochigi 323-0194 (JP)**
• **TAZAWA, Hiroshi
  Shimotsuke-shi, Tochigi 323-0194 (JP)**
• **KAJIYA, Shunichi
  Shimotsuke-shi, Tochigi 323-0194 (JP)**

(74) Representative: **Ter Meer Steinmeister & Partner
Patentanwälte mbB
Nymphenburger Straße 4
80335 München (DE)**

(54) **ANTI-REFLECTION BODY, AND OPTICAL ELEMENT**

(57)     An anti-reflection body includes a substrate and a cured product of a curable composition disposed on the substrate. The substrate has a refractive index of 1.60 to 1.90 at a wavelength of 589 nm. The curable composition includes metal oxide nanoparticles, one or more polymerizable monomers, and a photopolymerization initiator. The cured product has a microscopic convex-concave structure.

# FIG.1A

## Description

TECHNICAL FIELD

The present invention relates to anti-reflection bodies and optical elements.

BACKGROUND ART

An anti-reflective film, which can inhibit generation of undesired light (reflected light), such as flare and ghosting, is formed on a surface of an optical element or optical lens that is a constituent member of a sensor or a lens unit. In recent years, a refractive index of a glass substrate has been increased for the purpose of thinning a lens or increasing resolution. Thus, refractive index modulation and an increase in a refractive index of an anti-reflective film are desired.

As such an anti-reflective film, a dielectric multilayer film in which thin films having different refractive indices are laminated with an appropriate film thickness is known. However, for such a dielectric multilayer film, it is necessary to adjust a film thickness and an refractive index of each layer according to an refractive index of a glass substrate, and therefore there is a problem such that it is difficult to design and control variations in implementation. Further, there is also a problem such that oblique incident light does not satisfy conditions for interference, and therefore it is difficult to achieve anti-reflection properties against light of a wide wavelength band at a wide incident angle range.

Compared to the above dielectric multilayer film, an anti-reflective film having a moth eye-like microscopic convex-concave structure can inhibit generation of reflected light with respect to light of a wide wavelength range at a wide incident angle range. As the moth eye-like anti-reflective film, direct molding of the moth eye-like structure in a lens or formation of the moth eye-like structure in an intermediate layer of a multilayer has been known. However, both proposed dielectric multilayer films are insufficient in processability, versatility, and simplicity, and there is a demand for an anti-reflective film that can be put to practical use, and a method of producing such an anti-reflective film.

Moreover, a microscopic convex-concave structure formed of a cured product of a curable composition including a monofunctional monomer, a bifunctional monomer, and a polyfunctional monomer including three or more functional groups is proposed as a microscopic convex-concave structure for improving anti-reflection performance (see Patent Document 1).

However, even the above proposed microscopic convex-concave structure does not sufficiently achieve satisfactory inhibition of generation of interference light and reduction in reflectance.

CITATION LIST

PATENT DOCUMENTS

Patent Document 1: Japanese Patent No. 6432134

SUMMARY OF THE INVENTION

TECHNICAL PROBLEM

The present invention aims to solve the above various problems existing in the related art, and to achieve the following object. Specifically, an object of the present invention is to provide an anti-reflection body and an optical element, both of which can inhibit generation of interference light.

SOLUTION TO THE PROBLEM

Means for solving the above problems are as follows.

<1> An anti-reflection body including:

a substrate having a refractive index of 1.60 to 1.90 at a wavelength of 589 nm; and
a cured product of a curable composition disposed on the substrate, the curable composition including metal oxide nanoparticles, one or more polymerizable monomers, and a photopolymerization initiator,

wherein the cured product has a microscopic convex-concave structure.
<2> The anti-reflection body according to <1>,
wherein the one or more polymerizable monomers include a polyfunctional (meth)acrylate monomer.

<3> The anti-reflection body according to <1> or <2>,
wherein the one or more polymerizable monomers include a polyfunctional (meth)acrylate monomer and a monofunctional (meth)acrylic monomer.

<4> The anti-reflection body according to any one of <1> to <3>,
wherein the metal oxide nanoparticles have a media diameter (D50) of 1 nm or greater and 100 nm or less.

<5> The anti-reflection body according to any one of <1> to <4>,
wherein an amount of the metal oxide nanoparticles in the curable composition is 50 percent by mass or greater and 80 percent by mass or less relative to a total amount of the one or more polymerizable monomers and the metal oxide nanoparticles.

<6> The anti-reflection body according to any one of <1> to <7>,
wherein the substrate includes glass.

<7> The anti-reflection body according to any one of <1> to <6>,
wherein an absolute value $|n_1-n_2|$ of a difference in a refractive index between a refractive index $n_1$ of the substrate at a wavelength of 589 nm and a refractive index $n_2$ of the cured product at a wavelength of 589 nm is 0.10 or less.

<8> The anti-reflection body according to any one of <1> to <7>,
wherein a refractive index $n_1$ of the substrate at a wavelength of 589 nm and a refractive index $n_2$ of the cured product at a wavelength of 589 nm satisfy $n_1 > n_2$.

<9> The anti-reflection body according to any one of <3> to <8>,
wherein a mass ratio $(C_1:C_2)$ of an amount $C_1$ of the polyfunctional (meth)acrylate monomer to an amount $C_2$ of the monofunctional (meth)acrylic monomer is 1:99 to 99:1.

<10> An optical element including:
the anti-reflection body of any one of <1> to <9>.

EFFECTS OF THE INVENTION

According to the present invention, the above various problems existing in the related art can be solved, the above object can be achieved, and an anti-reflection body and an optical element, both of which can inhibit generation of interference light, can be provided.

BRIEF DESCRIPTION OF THE DRAWINGS

[Fig. 1A] Fig. 1A is a cross-sectional view illustrating an embodiment of a microscopic convex-concave structure at a surface of an anti-reflection body of the present invention.
[Fig. 1B] Fig. 1B is a cross-sectional view illustrating another embodiment of the microscopic convex-concave structure at the surface of the anti-reflection body of the present invention.
[Fig. 2A] Fig. 2A is a graph depicting the results of refractive indices of the active energy ray curable compositions of Preparation Examples 1 to 3 and Comparative Preparation Example 1, respectively, where a vertical axis represents a refractive index and a horizontal axis represents a wavelength (nm).
[Fig. 2B] Fig. 2B is a graph depicting the results of refractive indices of the active energy ray curable compositions of Preparation Examples 4 to 8, respectively, where a vertical axis represents a refractive index and a horizontal axis represents a wavelength (nm).
[Fig. 3] Fig. 3 is a graph depicting the results of the transmittance of the active energy ray curable compositions of Preparation Example 7 and Comparative Preparation Example 1, respectively, where a vertical axis represents transmittance (%) and a horizontal axis represents a wavelength (nm).
[Fig. 4A] Fig. 4A is a top view illustrating a surface of a cured product of the active energy ray curable composition (HDDA-0) of Comparative Preparation Example 1 molded using a mold having a depth of 160 nm.
[Fig. 4B] Fig. 4B is a cross-sectional view of the cured product of the active energy ray curable composition (HDDA-0) of Comparative Preparation Example 1 molded using the mold having the depth of 160 nm.
[Fig. 4C] Fig. 4C is a top view illustrating a surface of a cured product of the active energy ray curable composition (HDDA-75) of Preparation Example 7 molded using a mold having a depth of 160 nm.
[Fig. 4D] Fig. 4D is a cross-sectional view of the cured product of the active energy ray curable composition (HDDA-75) of Preparation Example 7 molded using the mold having the depth of 160 nm.
[Fig. 4E] Fig. 4E is a cross-sectional view of a cured product of the active energy ray curable composition (HDDA-0) of Comparative Preparation Example 1 molded using a mold having a depth of 400 nm.
[Fig. 4F] Fig. 4F is a cross-sectional view of a cured product of the active energy ray curable composition (HDDA-75) of Preparation Example 7 molded using a mold having a depth of 400 nm.

[Fig. 5] Fig. 5 is a diagram depicting reflection spectra of light reflected at two interfaces, an interface between air and an active energy ray cured product, and an interface between the active energy ray cured product and a substrate in the anti-reflection body 1 of Example 1 and in the anti-reflection body 2 of Comparative Example 1, respectively, where a vertical axis represents reflectance (%) and a horizontal axis represents a wavelength (nm).

[Fig. 6] Fig. 6 is a diagram depicting reflection spectra of light reflected at two interfaces, an interface between air and an active energy ray cured product, and an interface between the active energy ray cured product and a substrate in the anti-reflection body 3 of Example 2 and in the anti-reflection body 4 of Comparative Example 2, respectively, where a vertical axis represents reflectance (%) and a horizontal axis represents a wavelength (nm).

[Fig. 7] Fig. 7 is a diagram depicting reflection spectra of light reflected at two interfaces, an interface between air and an active energy ray cured product, and an interface between the active energy ray cured product and a substrate in the anti-reflection body 5 of Example 3 and in the anti-reflection body 6 of Comparative Example 3, respectively, where a vertical axis represents reflectance (%) and a horizontal axis represents a wavelength (nm).

[Fig. 8] Fig. 8 is a diagram depicting reflection spectra of substrates (material: N-SF5, N-SF11, and S-LAH53) used in the anti-reflection bodies 1 to 6 of Examples 1 to 3 and Comparative Examples 1 to 3, respectively, where a vertical axis represents reflectance (%) and a horizontal axis represents a wavelength (nm).

DESCRIPTION OF EMBODIMENTS

(Anti-reflection body)

The anti-reflection body of the present invention includes a substrate and a cured product, and may further include other members, as necessary.

The substrate has a refractive index of 1.60 to 1.90 at a wavelength of 589 nm. The cured product is a cured product of a curable composition including metal oxide nanoparticles, one or more polymerizable monomers, and a photopolymerization initiator. The cured product has a microscopic convex-concave structure.

In the case where a refractive index of a substrate and a refractive index of an anti-reflection body are different from each other when the anti-reflection body is an anti-reflection body of an optical element or optical lens that is a constituent member of a sensor, a lens unit, or the like, especially when the anti-reflection body is an anti-reflection body disposed at a surface of an optical lens, undesired light, such as reflected light at an interface between the substrate and the anti-reflection body, and an interference light within an antireflective film, is generated. Therefore, it is necessary to bring the refractive indices of both materials close to each other.

The present inventors have conducted intensive studies, and found that an anti-reflection body including a substrate having a refractive index of 1.60 to 1.90 at a wavelength of 589 nm, and a cured product of a curable composition disposed on the substrate, where the curable composition includes metal oxide nanoparticles, one or more polymerizable monomers, and a photopolymerization initiator, and the cured product has a microscopic convex-concave structure, can inhibit generation of interference light.

<Substrate>

The substrate is not particularly limited, as long as the refractive index of the substrate is 1.60 to 1.90 at a wavelength of 589 nm, and may be appropriately selected according to the intended purpose. The substrate is preferably a transparent substrate.

In the present specification, the term "transparent" means that transmittance of light having wavelengths belongs to a band for use (band range of visible light and near infrared light, approximately 360 nm to approximately 830 nm) is high, for example, transmittance of the light is preferably 70% or higher.

Note that the refractive index of the substrate can be measured, for example, by a near infrared spectrometer (USPM-RU-W, produced by Olympus Corporation).

A material of the substrate is not particularly limited, as long as the refractive index of the substrate is 1.60 to 1.90 at a wavelength of 589 nm, and may be appropriately selected according to the intended purpose. Examples of the material of the substrate include various types of glass, chemically strengthened glass, quartz, crystal, sapphire, polymethyl methacrylate (PMMA), cyclo olefin polymers, cyclo olefin copolymers, and the like. The above materials may be used alone or in combination. Among the above materials, glass is preferred.

A shape of the substrate is not particularly limited, and may be appropriately selected according to the intended purpose. Examples of the shape include plate shapes, curved shapes, such as lens shapes, and the like.

A size of the substrate is not particularly limited, and may be appropriately selected according to the intended purpose.

Specific examples of the substrate that is glass having a refractive index of 1.60 to 1.90 at a wavelength of 589 nm include a plano-convex lens 10-12 mm (material: N-SF5, refractive index at wavelength of 589 nm: 1.673, produced by Edmund Optics), a plano-convex lens 10-12 mm (material: N-SF11, refractive index at wavelength of 589 nm: 1.784, produced by Edmund Optics), a flat plate (material: S-LAH53, refractive index at wavelength of 589 nm: 1.806, produced by OHARA INC.), a plano-convex lens 10-12 mm (material: N-LASF9, refractive index at wavelength of 589 nm: 1.850, produced by Edmund Optics), and the like.

<Cured product>

The cured product is a cured product of a curable composition including metal oxide nanoparticles, one or more polymerizable monomers, and a photopolymerization initiator.

The cured product has a microscopic convex-concave structure. The anti-reflection body preferably has the microscopic convex-concave structure at a surface of the anti-reflection body. The above microscopic convex-concave structure formed at the surface of the anti-reflection body can inhibit generation of interference light. In addition, the microscopic convex-concave structure can reduce reflectance, and can improve antireflection performance.

The microscopic convex-concave structure will be described hereinafter with reference to drawings, but the present invention is not limited to the following embodiments.

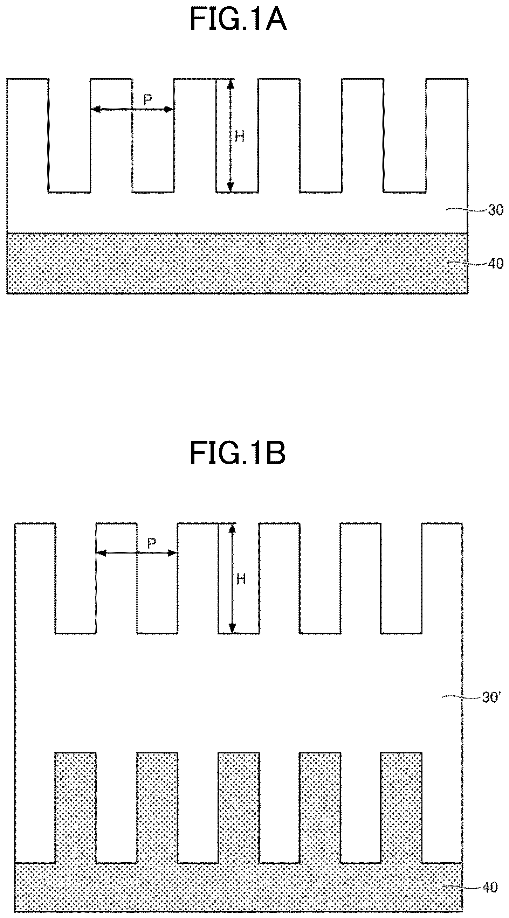

Fig. 1A is a diagram illustrating an embodiment of the microscopic convex-concave structure at the surface of the anti-reflection body.

Convex portions and concave portions of the microscopic convex-concave structure 30 of the anti-reflection body may be arranged periodically (e.g., a houndstooth pattern, a rectangular lattice pattern, or the like) as illustrated in Fig. 1A, or may be arranged randomly. Shapes of the convex portions and the concave portions of the microscopic convex-concave structure are not particularly limited. The shapes may be shell shapes, cone shapes, columnar shapes, needle shapes, or the like. Note that the shape of concave portion means a shape defined by the inner walls of the concave portion.

The convex-concave period (convex-concave pitch) P of the microscopic convex-concave structure 30 of the anti-reflection body is not particularly limited, and may be appropriately selected according to the intended purpose. The convex-concave period (convex-concave pitch) P is preferably equal to or shorter than wavelengths of visible rays, more preferably 830 nm or shorter, yet more preferably 350 nm or shorter, and particularly preferably 280 nm or shorter. Moreover, the lower limit of the convex-concave period P of the microscopic convex-concave structure 30 is not particularly limited, and may be appropriately selected according to the intended purpose. The lower limit of the convex-concave period P is preferably 100 nm or longer, and more preferably 150 nm or longer. The upper limit and the lower limit of the convex-concave period P of the microscopic convex-concave structure 30 can be appropriately combined. For example, the combination of the upper limit and the lower limit can be 100 nm or longer and 830 nm or shorter, 100 nm or longer and 350 nm or shorter, 100 nm or longer and 280 nm or shorter, 150 nm or longer and 830 nm or shorter, 150 nm or longer and 350 nm or shorter, 150 nm or longer and 280 nm or shorter, or the like.

By setting the convex-concave period P of the microscopic convex-concave structure 30 to be equal to or shorter than the wavelengths of visible light, in other words, by setting the microscopic convex-concave structure to be a so-called moth-eye structure, more excellent antireflection performance can be achieved.

The convex-concave period P of the microscopic convex-concave structure 30 is an arithmetic mean value of the distances between the adjacent convex portions, and between the adjacent concave portions.

Examples of a method of determining an arithmetic mean of the distance between adjacent convex portions and the distance between adjacent concave portions include a method of selecting multiple combinations of adjacent convex portions, combinations of adjacent concave portions, or both, measuring a distance between the concave portions or a distance between the concave portions constituting each combination, and calculating an average of the measured values, and the like.

The average convex-concave height (depth of the concave portion) H of the microscopic convex-concave structure 30 is not particularly limited, and may be appropriately selected according to the intended purpose. The average convex-concave height H is preferably 190 nm or greater, and more preferably 320 nm or less. When the average convex-concave height H of the microscopic convex-concave structure is 190 nm or greater, reflection chromaticity can be maintained to be neutral. When the average convex-concave height H of the microscopic convex-concave structure is 320 nm or less, a thin film of the anti-reflection body can be formed.

In the present specification, the average convex-concave height H of the microscopic convex-concave structure 30 is a distance between the bottom of the concave portion and the apex of the convex portion, as illustrated in Fig. 1A. The average convex-concave height can be determined by measuring multiple convex-concave heights H (e.g., at 5 locations), and calculating the arithmetic mean of the measured heights.

Moreover, a thickness of a support portion (may be referred to as a "base portion" of the anti-reflection body 30 hereinafter) below the microscopic convex-concave structure, which is a portion of the anti-reflection body 30 where the microscopic convex-concave structure is not formed, is not particularly limited, and may be appropriately selected according to the intended purpose. For example, the thickness of the support portion can be in an approximate range of 500 nm or greater and 9,000 nm or less.

Here, the microscopic convex-concave structure 30 of the anti-reflection body is disposed at least at a surface that is not in contact with the substrate 40 (an opposite side of the side in contact with the substrate 40), as illustrated in Fig. 1A. As another embodiment, a microscopic convex-concave structure 30' may be disposed on the both sides as illustrated in Fig. 1B.

Note that the convex-concave period P of the microscopic convex-concave structure, the average convex-concave height H of the microscopic convex-concave structure, and the thickness of the base portion can be measured by observation using, for example, a scanning electron microscope (SEM) or a cross-sectional transmission electron microscope (cross-sectional TEM).

An absolute value $|n_1-n_2|$ of the difference in the refractive index between the refractive index $n_1$ of the substrate at a wavelength of 589 nm and the refractive index $n_2$ of the cured product at a wavelength of 589 nm is not particularly limited, and may be appropriately selected according to the intended purpose. The absolute value $|n_1-n_2|$ is preferably 0.263 or less, more preferably 0.25 or less, yet more preferably 0.2 or less, and particularly preferably 0.1 or less. When the absolute value $|n_1-n_2|$ of the difference in the refractive index is 0.263 or less, reflectance can be more suitably inhibited.

Moreover, the refractive index $n_1$ of the substrate at a wavelength of 589 nm and the refractive index $n_2$ of the cured product at a wavelength of 589 nm preferably satisfy $n_1 > n_2$ in view of the ability of inhibiting generation of interference light and reduction in reflectance, and excellent anti-reflection properties.

<<Curable composition>>

The curable composition includes metal oxide nanoparticles, one or more polymerizable monomers, and a photopolymerization initiator, and may further include other components, as necessary.

-Metal oxide nanoparticles-

The metal oxide nanoparticles are not particularly limited, and may be appropriately selected according to the intended purpose. Examples of the metal oxide nanoparticles include oxide nanoparticles of Si, Ti, Al, Zr, In, Zn, Sn, La, Y, Ce, Mg, Ba, Ca, Sb, and the like. The above metal oxide nanoparticles may be used alone or in combination. Among the above metal oxide nanoparticles, oxide nanoparticles of at least one metal selected from the group consisting of Ti, Al, Zr, Zn, Sn, and Ce are preferred, and zirconium oxide (zirconia) nanoparticles are more preferred from a viewpoint of increasing a refractive index.

The metal oxide nanoparticles may be oxide nanoparticles of a single metal, solid solution nanoparticles of two or more oxides, or composite oxide nanoparticles.

Examples of the oxide nanoparticles of the single metal include nanoparticles of silicon dioxide ($SiO_2$), aluminum oxide ($Al_2O_3$), titanium oxide ($TiO_2$), zirconium oxide ($ZrO_2$), indium oxide ($In_2O_3$), zinc oxide (ZnO), tin oxide ($SnO_2$), lanthanum oxide ($La_2O_3$), yttrium oxide ($Y_2O_3$), cerium oxide ($CeO_2$), magnesium oxide (MgO), and the like.

Examples of the solid solution nanoparticles of two or more oxides include nanoparticles of indium tin oxide (ITO), antimony tin oxide (ATO), and the like.

Examples of the composite oxide nanoparticles include nanoparticles of barium titanate ($BaTiO_3$), perovskite ($CaTiO_3$), spinel ($MgAl_2O_4$), and the like.

A particle diameter of the metal oxide nanoparticles is not particularly limited, as long as the metal oxide nanoparticles are nanoparticles, and may be appropriately selected according to the intended purpose. The particle diameter of the metal oxide nanoparticles is preferably smaller than the convex-concave period P of the microscopic convex-concave structure 30 and the average convex-concave height H of the microscopic convex-concave structure. The median diameter (D50) of the metal oxide nanoparticles is more preferably 1 nm or greater and 100 nm or less, yet more preferably 1 nm or greater and 50 nm or less, and particularly preferably 1 nm or greater and 20 nm or less. When the particle diameter of the metal oxide nanoparticles is greater than the convex-concave period P of the microscopic convex-concave structure 30 and the average convex-concave height H of the microscopic convex-concave structure, the metal oxide nanoparticles cannot penetrate into the microscopic convex-concave structure.

An amount of the metal oxide nanoparticles in the curable composition is not particularly limited, and may be appropriately selected according to the intended purpose. The amount of the metal oxide nanoparticles is preferably 20 percent by mass or greater and 80 percent by mass or less, more preferably 50 percent by mass or greater and 80 percent by mass or less, and yet more preferably 70 percent by mass or greater and 80 percent by mass or less, relative to a total amount of the one or more polymerizable monomers and the metal oxide nanoparticles. When the amount of the metal oxide nanoparticles is 20 percent by mass or greater relative to the total amount of the one or more polymerizable monomers and the metal oxide nanoparticles, a refractive index can be increased. The amount of the metal oxide nanoparticles being 80 percent by mass or less relative to the total amount of the one or more polymerizable monomers and the metal oxide nanoparticles is preferred because the photocurable composition has a viscosity that can be suitably used in a coating step or a microfabrication step. Moreover, the amount of the metal oxide nanoparticles being 50 percent by mass or greater relative to the total amount of the one or more polymerizable monomers and the metal oxide nanoparticles is preferred because a refractive index can be further increased.

-Polymerizable monomers-

The one or more polymerizable monomers are not particularly limited as long as the one or more polymerizable monomers are photopolymerizable, and may be appropriately selected from polymerizable monomers known in the related art. Examples of the one or more polymerizable monomers include polyfunctional (meth)acrylate monomers, monofunctional (meth)acrylic monomers, and the like.

In the present specification, the term "polyfunctional (meth)acrylate" means (meth)acrylate including two or more (meth)acryloyl groups in a molecule. Moreover, the term "monofunctional (meth)acrylic monomer" means a monomer including one polymerizable functional group having an unsaturated double bond, such as a (meth)acryloyl group, a vinyl group, or the like, in a molecule. Further, the term "(meth)acryloyl group" means an acryloyl group, a methacryloyl group, or both. Further, the term "(meth)acrylate" means acrylate, methacrylate, or both. Further, the term "(meth)acrylic acid" means acrylic acid, methacrylic acid, or both.

The polyfunctional (meth)acrylate monomer is not particularly limited, and may be appropriately selected according to the intended purpose. Examples of the polyfunctional (meth)acrylate monomer include esters between polyhydric alcohol and (meth)acrylic acid, and the like.

Specific examples of the esters between polyhydric alcohol and (meth)acrylic acid include polyethylene glycol di(meth)acrylate, ethylene glycol di(meth)acrylate, 1,4-dicyclohexane di(meth)acrylate, 1,6-hexanediol di(meth)acrylate, pentaerythritol tetra(meth)acrylate, pentaerythritol tri(meth)acrylate, trimethylol propane tri(meth)acrylate, trimethylol ethane tri(meth)acrylate, dipentaerythritol tetra(meth)acrylate, dipentaerythritol penta(meth)acrylate, dipentaerythritol hexa(meth)acrylate, 1,2,3-cyclohexane tetramethacrylate, polyurethane polyacrylate, polyester polyacrylate, and the like. The above esters may be used alone or in combination.

The monofunctional (meth)acrylate monomer is not particularly limited, and may be appropriately selected according to the intended purpose. Examples of the monofunctional (meth)acrylate monomer include benzyl (meth) acrylate, phenoxyethyl (meth)acrylate, tetrahydrofurfuryl (meth)acrylate, cyclohexyl (meth)acrylate, isobornyl (meth) acrylate, acryloylmorpholine, 2-ethylhexyl (meth)acrylate, octyl (meth)acrylate, n-butyl (meth)acrylate, ethyl (meth) acrylate, 3-phenoxybenzyl acrylate, and the like. The above monofunctional (meth)acrylate monomers may be used alone or in combination.

Among the above polymerizable monomers, the one or more polymerizable monomers preferably include both the polyfunctional (meth)acrylate monomer and the monofunctional (meth)acrylic monomer.

An amount of the one or more polymerizable monomers in the curable composition is not particularly limited, and may be appropriately selected according to the intended purpose. The amount of the one or more polymerizable monomers is preferably 20 percent by mass or greater and 80 percent by mass or less, more preferably 20 percent by mass or greater and 50 percent by mass or less, and yet more preferably 20 percent by mass or greater and 30 percent by mass or less, relative to a total amount of the one or more polymerizable monomers and the metal oxide nanoparticles. The amount of the one or more polymerizable monomers being 20 percent by mass or greater relative to a total amount of the one or more polymerizable monomers and the metal oxide nanoparticles is preferred because the photocurable composition has a viscosity that can be suitably used in a coating step or a microfabrication step. When the amount of the one or more polymerizable monomers is 80 percent by mass or less, a large amount of the metal oxide nanoparticles can be added so that a refractive index can be increased.

A mass ratio ($C_1:C_2$) of an amount $C_1$ of the polyfunctional (meth)acrylate monomer to an amount $C_2$ of the monofunctional (meth)acrylic monomer is not particularly limited, and may be appropriately selected according to the intended purpose. In view of the viscosity and photocurability, the mass ratio ($C_1:C_2$) is preferably 1:99 to 99:1, more preferably 5:95 to 95:5, and yet more preferably 10:90 to 90:10.

-Photopolymerization initiator-

The photopolymerization initiator is not particularly limited, and may be appropriately selected according to the intended purpose. Examples of the photopolymerization initiator include: carboxyl compounds, such as benzoin, benzoin methyl ether, benzoin ethyl ether, benzoin isopropyl ether, benzoin isobutyl ether, benzyl, benzophenone, p-methoxybenzophenone, 2,2-diethoxyacetophenone, $\alpha,\alpha$-dimethoxy-$\alpha$-phenylacetophenone, methyl phenyl glyoxylate, ethyl phenyl glyoxylate, 4,4'-bis(dimethylamino)benzophenone, 1-hydroxy-cyclohexyl-phenyl-ketone, 2-hydroxy-2-methyl-1-phenylpropan-1-one, and the like; sulfur compounds, such as tetramethylthiuram monosulfide, tetramethylthiuram disulfide, and the like; 2,4,6-trimethylbenzoyl-diphenyl-phosphine oxide; benzoyl diethoxyphosphine oxide; and the like. The above photopolymerization initiators may be used alone or in combination.

An amount of the photopolymerization initiator in the curable composition is not particularly limited, and may be appropriately selected according to the intended purpose. The amount of the photopolymerization initiator is preferably 0.01 parts by mass or greater and 10 parts by mass or less, and more preferably 1 part by mass or greater and 50 parts by mass or less, relative to 100 parts by mass of a total amount of the one or more polymerizable monomers and the metal oxide nanoparticles. When the amount of the photopolymerization initiator is 0.01 parts by mass or greater relative to 100 parts by mass of a total amount of the one or more polymerizable monomers and the metal oxide nanoparticles, curing is sufficiently progressed, and an appropriate molecular weight of a cured product is obtained so that sufficient strength is achieved. When the amount of the photopolymerization initiator is 10 parts by mass or less, a problem, such as coloration of a cured product due to a residue of the photopolymerization initiator or the like does not occur.

-Other components-

The curable composition may further include a non-reactive polymer or an active energy ray sol-gel reactive component, as necessary. The curable composition may further include various additives, such as a thickener, a leveling agent, an ultraviolet absorber, a light stabilizer, a thermal stabilizer, a solvent, and the like.

A shape of the cured product in the anti-reflection body is not particularly limited. Examples of the shape of the cured product include a block shape, a layer shape, and the like. From a viewpoint of use in an optical element, the shape of the cured product is preferably a layer shape.

A thickness of the anti-reflection body in the form of a layer is not particularly limited, and may be appropriately selected according to the intended purpose. The thickness of the anti-reflection body is preferably 10 μm or less, more preferably 5 μm or less, and yet more preferably 1 μm or less. Moreover, the lower limit of the thickness of the anti-reflection body in the form of a layer is not particularly limited, and may be appropriately selected according to the intended purpose. In view of antireflection performance, the lower limit of the thickness is preferably 0.2 μm or greater, and more preferably 0.5 μm or greater. The upper limit and the lower limit of the thickness of the anti-reflection body can be appropriately combined. For example, the combination of the upper limit and the lower limit can be 0.2 μm or greater and 10 μ or less, 0.2 μm or greater and 5 μm or less, 0.2 μm or greater and 1 m or less, 0.5 μm or greater and 10 μ or less, 0.5 μm or greater and 5 μm or less, 0.5 μm or greater and 1 m or less, or the like.

The thickness of the anti-reflection body can be measured by observation using, for example, a scanning electron microscope (SEM) or a cross-sectional transmission electron microscope (cross-sectional TEM).

<Other members>

Other members of the anti-reflection body are not particularly limited as long as such members do not adversely affect the effects obtainable by the present invention, and may be appropriately selected according to the intended purpose. Examples of the other members include multilayer anti-reflective films (multilayer AR), retention films, and the like.

<<Multilayer anti-reflective film (multilayer AR)>>

In the case where a layer formed of the cured product is provided on one side of the substrate, a multilayer anti-reflective film (multilayer AR) may be further provided on the other side of the substrate. For example, there is a concern about scratch resistance and contamination resistance of a layer formed of the cured product, and therefore it may be difficult to use such a layer in a place where the surface may be exposed and may be contaminated. Thus, a highly durable, such as the multilayer anti-reflective film , can be provided on the exposed side. In addition, in the case where light is incident on both sides of the anti-reflection body, excellent antireflection performance can be achieved.

<<Retention film>>

The anti-reflection body may further include a retention film disposed on the layer formed of the cured product. The retention film is a film used for forming a microscopic convex-concave structure of the layer formed of the cured product. During production of the anti-reflection body, the retention film is used in a state of being integrated with the layer formed of the cured product, and may be a constituent component of the anti-reflection body.

<Method of producing anti-reflection body>

A method of producing the anti-reflection body is not particularly limited, and may be appropriately selected according to the intended purpose. For example, the method preferably includes a curable composition preparation step, a coating step, a pressing step, and a curing step, and may further include other steps, such as a peeling step and the like, as necessary.

<<Curable composition preparation step>>

The curable composition preparation step is a step in which the metal oxide nanoparticles, the one or more polymerizable monomers, the photopolymerization initiator, and, as necessary, other components are homogeneously mixed by a commonly known method to prepare the curable composition.

For the mixing, a stirrer, such as a disper or the like, can be used.

The metal oxide nanoparticles are preferably dispersed in a solvent before being mixed with the one or more polymerizable monomers in view of dispersibility of the metal oxide nanoparticles in the one or more polymerizable monomers. In this case, after mixing the metal oxide nanoparticles dispersed in the solvent and the one or more polymerizable monomers, only the solvent is preferably removed by evaporation.

The solvent is not particularly limited, as long as the metal oxide nanoparticles can be dispersed in the solvent, and may be appropriately selected according to the intended purpose. Examples of the solvent include diacetone alcohol (DAA), propylene glycol monomethyl ether acetate (PGMEA), methyl ethyl ketone (MEK), butyl acetate (BA), isopropyl alcohol (IPA), diisobutyl ketone (DIBK), hexyl acetate (HA), and the like. The above solvents may be used alone or in combination.

A dispersion liquid in which the metal oxide nanoparticles are dispersed in the solvent may be appropriately prepared, or a commercially available product may be used.

Examples of a commercially available product of the dispersion liquid in which the metal oxide nanoparticles are dispersed in the solvent include TZP-108 (zirconium oxide nanoparticle dispersion liquid, produced by Taisei Kako Co., Ltd.), CLEARTONE ZR (zirconium oxide nanoparticle dispersion liquid, produced by OKUNO Chemical Industries Co., Ltd.), ZIRCOSTAR (registered trademark) (zirconium oxide nanoparticle dispersion liquid, produced by NIPPON SHOKUBAI CO., LTD.), TTP-113 (titanium oxide nanoparticle dispersion liquid, produced by Taisei Kako Co., Ltd.), TAINOC (registered trademark) NRA-10M (titanium oxide nanoparticle dispersion liquid, produced by Taki Chemical Co., Ltd.), and the like.

<<Coating step>>

The coating step is a step in which the curable composition obtained in the curable composition preparation step is applied onto a substrate having a refractive index of 1.60 to 1.90 at a wavelength of 589 nm.

A coating method for the curable composition is not particularly limited, and may be appropriately selected from methods known in the related art. Examples of the coating method include microgravure coating, wire-bar coating, direct gravure coating, die coating, dip coating, spray coating, reverse roll coating, curtain coating, comma coating, knife coating, spin coating, and the like.

An amount of the curable composition to be coated can be adjusted in the coating step so that a film thickness of a cured product to be obtained in a below-described curing step can be adjusted.

<<Pressing step>>

The pressing step is a step in which a mold, the retention film, or the like is pressed against the film of the curable composition formed in the coating step to transfer a shape of the mold, the retention film, or the like. The mold or the retention film has a shape that serves as a mold of a desired microscopic convex-concave structure of the anti-reflection body.

The pressing force is not particularly limited, and may be appropriately selected according to the viscosity of the curable composition, a desired thickness of the anti-reflection body, or the like.

<<Curing step>>

The curing step is a step in which photocuring is performed on the curable composition after the pressing step. Thus, the microscopic convex-concave structure of the mold, the retention film, or the like in the pressing step can be transferred to the cured product of the curable composition.

The photocuring can be performed using active energy rays.

The active energy rays are not particularly limited, and may be appropriately selected according to the intended purpose. Examples of the active energy rays include ultraviolet rays, electron beams, $\alpha$ rays, $\beta$ rays, $\gamma$ rays, X rays, and the like. The above active energy rays may be used alone or in combination.

Note that the curing step may be performed after drying the curable composition.

Conditions for drying the curable composition are not particularly limited. The curable composition may be dried naturally, or may be dried artificially by adjusting the drying humidity, the drying time, or the like.

In the case where air is blown to the surface of the coated curable composition during drying, air is preferably blown so that ripples are not formed on the surface of the coating film by the wind. The ripples are formed by the wind, the coating appearance may be impaired, or the thickness irregularities may be formed in the surface profile.

<<Peeling step>>

In the case where the pressing step is performed with the mold, the mold is peeled off to obtain an anti-reflection body having a microscopic convex-concave structure.

A method of the peeling is not particularly limited, and may be appropriately selected from methods known in the related art.

In the case where the pressing step is performed with the retention film, the retention film can be peeled at the time of use, and the retention film can remain until the time of use. Thus, the microscopic convex-concave structure can be protected.

As described above, the anti-reflection body of the present invention relates to an anti-reflection body including a cured product having a high refractive index, in which a microscopic convex-concave structure of a moth-eye shape is molded by photo nanoimprint molding using a curable composition capable of modulating a refractive index. The curable composition includes metal oxide nanoparticles (preferably metal oxide nanoparticles having a high refractive index), one or more polymerizable monomers, and a photopolymerization initiator. The curable composition can be applied and molded preferably without a solvent. Preferably, molding using a film mold is advantageous because of easy moldability on a flat or curved surface of a substrate. Moreover, the refractive index of the cured product can be brought close to the refractive index of the substrate, and can be preferably modulated to be equal to or lower than the refractive index of the substrate, by adjusting the amount of the metal oxide nanoparticles. By forming the anti-reflection body including the above cured product at a surface of a substrate having a high refractive index (1.60 to 1.90), the anti-reflection body in which undesired light is inhibited can be provided. The anti-reflection body can be suitably used for an optical element.

(Optical element)

The optical element of the present invention includes the anti-reflection body of the present invention, and may further include other members, as necessary. Thus, the optical element of the present invention can achieve excellent antireflection performance and transmittance with respect to light having wavelengths of a visible light range, and particularly, generation of undesired light, such as reflected light at an interface between the substrate and the anti-reflection body, interference light within an anti-reflective film, or the like, can be inhibited. As a result, optical properties in a wide wavelength range including from a visible light range to a near infrared range can be improved.

The optical element is not particularly limited, except that the optical element includes the above-described anti-reflection body of the present invention as a constituent component. Examples of the optical element include optical lenses, prisms, mirror reflectors, filters, diffraction grating, and the like.

(Optical device)

The optical device of the present invention includes the optical element of the present invention, and may further include other constituent components according to a type of the device, desired performance, and the like.

The optical device is not particularly limited, and may be appropriately selected according to the intended purpose. Examples of the optical device include: devices, such as imaging elements, imaging modules, and the like; and devices, such as image sensors, sensors using ultraviolet rays, and the like. Moreover, examples also include smartphones, personal computers, portable game devices, video cameras, transportation mechanisms (e.g., automobiles and airplanes), and the like, all of which include the above devices.

Examples

The present invention will be specifically described through Preparation Examples, Examples, and Comparative Examples hereinafter, but the present invention is not limited to Preparation Examples and Examples in any way.

(Preparation Example 1)

A polyfunctional acrylate monomer (1,6-hexanediol diacrylate, Viscoat #230, HDDA, produced by OSAKA ORGANIC CHEMICAL INDUSTRY LTD.) was added to a zirconia nanoparticles-dispersed monomer liquid (amount of zirconia nanoparticles: 80 percent by mass, median diameter (D50): 11 nm, amount of monofunctional acrylic monomer (3-phenoxybenzyl acrylate): 20 percent by mass) so that an amount of the zirconia nanoparticles (may be referred to as a "particle amount" hereinafter) was to be 20 percent by mass, followed by stirring the resultant mixture for 3 minutes by a planetary centrifugal stirrer (ARE-310, produced by THINKY CORPORATION). Subsequently, a photopolymerization initiator (Omnirad 184 (former Irgacure 184), produced by IGM Resins B.V.) was added to the mixture so that the amount of the photopolymerization initiator was to be 3 percent by mass, followed by stirring the resultant mixture for 3 minutes by a planetary centrifugal stirrer (ARE-310), thereby preparing an active energy ray curable composition "HDDA-20."

(Preparation Example 2)

An active energy ray curable composition "HDDA-30" was prepared in the same manner as in Preparation Example 1, except that 1,6-hexanediol diacrylate was added so that the particle amount was 30 percent by mass instead of adding 1,6-hexanediol diacrylate to adjust the particle amount to be 20 percent by mass.

(Preparation Example 3)

An active energy ray curable composition "HDDA-40" was prepared in the same manner as in Preparation Example 1, except that 1,6-hexanediol diacrylate was added so that the particle amount was 40 percent by mass instead of adding 1,6-hexanediol diacrylate to adjust the particle amount to be 20 percent by mass.

(Preparation Example 4)

An active energy ray curable composition "HDDA-50" was prepared in the same manner as in Preparation Example 1, except that 1,6-hexanediol diacrylate was added so that the particle amount was 50 percent by mass instead of adding 1,6-hexanediol diacrylate to adjust the particle amount to be 20 percent by mass.

(Preparation Example 5)

An active energy ray curable composition "HDDA-60" was prepared in the same manner as in Preparation Example 1, except that 1,6-hexanediol diacrylate was added so that the particle amount was 60 percent by mass instead of adding 1,6-hexanediol diacrylate to adjust the particle amount to be 20 percent by mass.

(Preparation Example 6)

An active energy ray curable composition "HDDA-70" was prepared in the same manner as in Preparation Example 1, except that 1,6-hexanediol diacrylate was added so that the particle amount was 70 percent by mass instead of adding 1,6-hexanediol diacrylate to adjust the particle amount to be 20 percent by mass.

(Preparation Example 7)

An active energy ray curable composition "HDDA-75" was prepared in the same manner as in Preparation Example 1, except that 1,6-hexanediol diacrylate was added so that the particle amount was 75 percent by mass instead of adding 1,6-hexanediol diacrylate to adjust the particle amount to be 20 percent by mass.

(Preparation Example 8)

An active energy ray curable composition "HDDA-79" was prepared in the same manner as in Preparation Example 1, except that 1,6-hexanediol diacrylate was added so that the particle amount was 79 percent by mass instead of adding 1,6-hexanediol diacrylate to adjust the particle amount to be 20 percent by mass.

(Comparative Preparation Example 1)

A photopolymerization initiator (Omnirad 184 (former Irgacure 184), produced by IGM Resins B.V.) was added to a polyfunctional acrylate monomer (1,6-hexanediol diacrylate, Viscoat #230, HDDA, produced by OSAKA ORGANIC CHEMICAL INDUSTRY LTD.) so that the amount of the photopolymerization initiator was to be 3 percent by mass, and the resultant mixture was stirred for 3 minutes by a planetary centrifugal stirrer (ARE-310), thereby preparing an active energy ray curable composition "HDDA-0."

A mass ratio between the mass of the monofunctional monomer and the mass of the polyfunctional monomer in each of the active energy ray curable compositions of Preparation Examples 1 to 8 and Comparative Preparation Example 1 is presented in Table 1 below.

[Table 1]

|  |  | Polyfunctional monomer ($C_1$) | Monofunctional monomer ($C_2$) |
|---|---|---|---|
| Prep. Ex. 1 | HDDA-20 | 94 | 6 |
| Prep. Ex. 2 | HDDA-30 | 89 | 11 |
| Prep. Ex. 3 | HDDA-40 | 83 | 17 |
| Prep. Ex. 4 | HDDA-50 | 75 | 25 |
| Prep. Ex. 5 | HDDA-60 | 62 | 38 |
| Prep. Ex. 6 | HDDA-70 | 42 | 58 |
| Prep. Ex. 7 | HDDA-75 | 25 | 75 |
| Prep. Ex. 8 | HDDA-79 | 6 | 94 |
| Comp. Prep. Ex. 1 | HDDA-0 | 100 | 0 |

<Measurement of refractive index>

A refractive index of each of the active energy ray curable compositions of Preparation Examples 1 to 8 and Comparative Preparation Example 1 was measured in the following manner.

On a glass substrate modified with a release layer by a liquid phase treatment with a fluorine-based releasing agent (3M Novec 1720, produced by 3M Japan Limited), 0.05 mL of the active energy ray curable composition was dripped. The active energy ray curable composition on the glass substrate was sandwiched with a release layer-modified glass substrate via a glass spacer having a thickness of 1 mm. The active energy ray curable composition was then cured by performing light irradiation once using a conveyor-type ultraviolet irradiator (Eye Grandage ECS-401GX, produced by EYE GRAPHICS COMPANY) at a speed of 98 cm/min. The upper side substrate was peeled off to produce an active energy ray cured product, thereby preparing a measurement sample.

The reflection spectrum of the measurement sample at a wavelengths of 380 nm to 1,050 nm was obtained using a near infrared spectrometer (USPM-RU-W, produced by Olympus Corporation), a refractive index was calculated according to the following equation (1) using the reflectance R at each wavelength.

$$\text{Refractive index } n = (1 + R^{0.5})/(1 - R^{0.5}) \quad \text{Equation (1)}$$

In addition, the reflection spectra of a plano-convex lens 10-12 mm (material: N-SF5, produced by Edmund Optics), a plano-convex lens 10-12 mm (material: N-SF11, produced by Edmund Optics), and a flat plate (material: S-LAH53, refractive index at wavelength of 589 nm: 1.806, produced by OHARA INC.) at wavelengths of 380 nm to 1,050 nm were also obtained using a near infrared spectrometer (USPM-RU-W), and a refractive index n was calculated according to the equation (1) using the reflectance R at each wavelength.

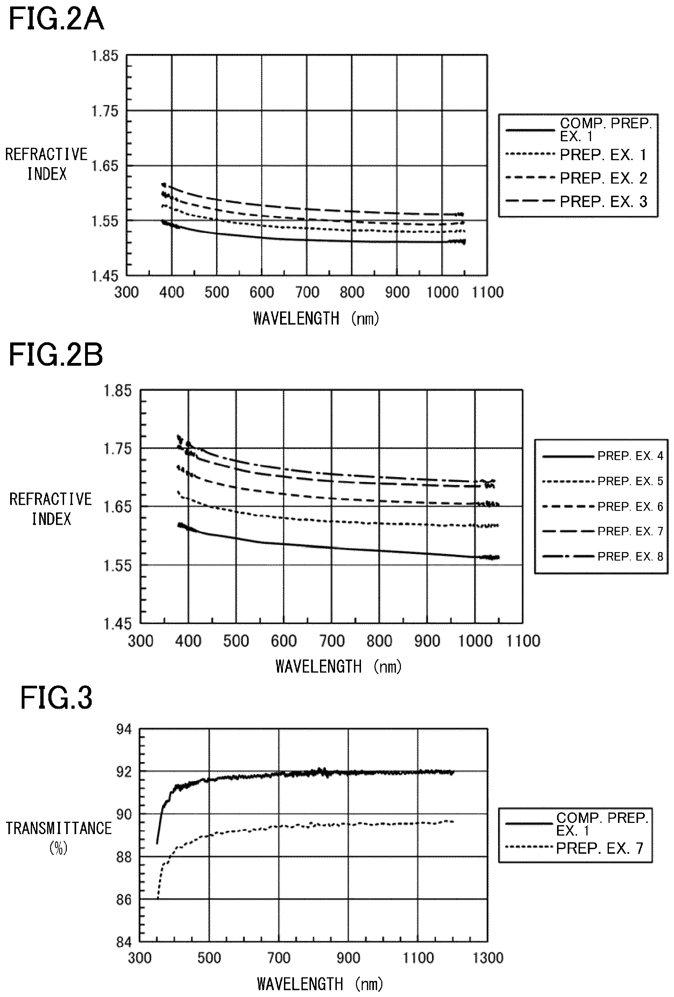

The result of the refractive index n of each of the active energy ray curable compositions of Preparation Examples 1 to 8 and Comparative Preparation Example 1 is depicted in Fig. 2.

Moreover, the results of the refractive indices $n_2$ of the active energy ray curable compositions of Preparation Examples 1 to 8 and Comparative Preparation Example 1 at wavelengths of 486 nm, 589 nm, and 656 nm, and the results of the refractive indices $n_1$ of the plano-convex lens (N-SF5), the plano-convex lens (N-SF11), and the flat plate (S-LAH53) are presented in Table 2-1 below.

In addition, the absolute value $|n_1-n_2|$ of the difference in refractive index between the refractive index $n_1$ of the plano-convex lens (N-SF5), the plano-convex lens (N-SF11), or the flat plate (S-LAH53) and the refractive index $n_2$ of each of the active energy ray curable compositions of Preparation Examples 1 to 8 and Comparative Preparation Example 1 at the wavelength of 589 nm, and whether or not the refractive index $n_1$ and the refractive index $n_2$ satisfy $n_1 > n_2$ are presented in Table 2-2 below. In Table 2-2 below, the column of $n_1 > n_2$ marked as "A" means that $n_1 > n_2$ is satisfied, and the column of $n_1 > n_2$ marked as "B" means that $n_1 < n_2$ is satisfied (i.e., $n_1 > n_2$ is not satisfied).

[Table 2-1]

|  |  | Refractive index n | | |
|---|---|---|---|---|
|  |  | 486nm | 589nm | 656nm |
| Prep. Ex. 1 | HDDA-20 | 1.553 | 1.543 | 1.539 |

(continued)

| | | Refractive index n | | |
|---|---|---|---|---|
| | | 486nm | 589nm | 656nm |
| Prep. Ex. 2 | HDDA-30 | 1.572 | 1.560 | 1.556 |
| Prep. Ex. 3 | HDDA-40 | 1.590 | 1.578 | 1.574 |
| Prep. Ex. 4 | HDDA-50 | 1.597 | 1.586 | 1.583 |
| Prep. Ex. 5 | HDDA-60 | 1.643 | 1.631 | 1.627 |
| Prep. Ex. 6 | HDDA-70 | 1.685 | 1.672 | 1.667 |
| Prep. Ex. 7 | HDDA-75 | 1.717 | 1.703 | 1.697 |
| Prep. Ex. 8 | HDDA-79 | 1.731 | 1.715 | 1.710 |
| Comp. Prep. Ex. 1 | HDDA-0 | 1.528 | 1.520 | 1.516 |
| Plano-convex lens | N-SF5 | 1.688 | 1.673 | 1.667 |
| Plano-convex lens | N-SF11 | 1.807 | 1.784 | 1.776 |
| Flat plate | S-LAH53 | 1.819 | 1.806 | 1.801 |

[Table 2-2]

| | | Refractive index difference | | | | | |
|---|---|---|---|---|---|---|---|
| | | $n_1$=N-SF5 $n_2$=589nm | | $n_1$=N-SF11 $n_2$=589nm | | $n_1$=S-LAH53 $n_2$=589nm | |
| | | $\|n_1-n_2\|$ | $n_1 > n_2$ | $\|n_1-n_2\|$ | $n_1 > n_2$ | $\|n_1-n_2\|$ | $n_1 > n_2$ |
| Prep. Ex. 1 | HDDA-20 | 0.130 | A | 0.241 | A | 0.263 | A |
| Prep. Ex. 2 | HDDA-30 | 0.113 | A | 0.224 | A | 0.246 | A |
| Prep. Ex. 3 | HDDA-40 | 0.095 | A | 0.206 | A | 0.228 | A |
| Prep. Ex. 4 | HDDA-50 | 0.087 | A | 0.198 | A | 0.220 | A |
| Prep. Ex. 5 | HDDA-60 | 0.042 | A | 0.153 | A | 0.175 | A |
| Prep. Ex. 6 | HDDA-70 | 0.001 | A | 0.112 | A | 0.134 | A |
| Prep. Ex. 7 | HDDA-75 | 0.030 | B | 0.081 | A | 0.103 | A |
| Prep. Ex. 8 | HDDA- 79 | 0.042 | B | 0.069 | A | 0.091 | A |
| Comp. Prep. Ex. 1 | HDDA-0 | 0.153 | A | 0.264 | A | 0.286 | A |

According to the results of Fig. 2 and Table 2-1, the refractive index n was increased as the amount of the metal oxide nanoparticles was increased. Moreover, the modulability of the refractive index n (1.52 to 1.72) was confirmed.

According to the results of Table 2-2, the refractive index difference $|n_1-n_2|$ between the plano-convex lens (N-SF5) and HDDA-70 (Preparation Example 6) at 589 nm was 0.001, whereas the refractive index difference $|n_1-n_2|$ between the plano-convex lens (N-SF5) and HDDA-0 (Comparative Preparation Example 1) at 589 nm was 0.153. In addition, the refractive index difference $|n_1-n_2|$ between the plano-convex lens (N-SF11) and HDDA-79 (Preparation Example 8) at 589 nm was 0.069, whereas the refractive index difference $|n_1-n_2|$ between the plano-convex lens (N-SF11) and HDDA-0 (Comparative Preparation Example 1) at 589 nm was 0.264. Moreover, the refractive index difference $|n_1-n_2|$ between the flat plate (S-LAH53) and HDDA-79 (Preparation Example 8) at 589 nm was 0.091, whereas the refractive index difference $|n_1-n_2|$ between the (S-LAH53) and HDDA-0 (Comparative Preparation Example 1) at 589 nm was 0.286.

In Examples below, materials were selected so that a refractive index $n_2$ of a cured product of an active energy ray curable composition was less than a refractive index $n_1$ of a substrate (i.e., $n_1 > n_2$).

<Measurement of transmittance>

The transmittance of each of the active energy ray curable compositions of Preparation Example 7 and Comparative Preparation Example 1 was measured in the following manner.

On a glass substrate modified with a release layer by a liquid phase treatment with a fluorine-based releasing agent (3M Novec 1720, produced by 3M Japan Limited), 0.05 mL of the active energy ray curable composition was dripped. The active energy ray curable composition was then cured by performing light irradiation once using a conveyor-type ultraviolet irradiator (Eye Grandage ECS-401GX, produced by EYE GRAPHICS COMPANY) at a speed of 98 cm/min. The upper side substrate was peeled off to produce an active energy ray cured product, thereby preparing a measurement sample.

The transmittance of the measurement sample was measured by a UV/VIS/NIR spectrophotometer (V-770, produced by JASCO Corporation).

The results of the transmittance of the active energy ray curable compositions of Preparation Example 7 and Comparative Preparation Example 1 are depicted in Fig. 3. It was found that HDDA-75 of Preparation Example 7 in which 75 percent by mass of the metal oxide nanoparticles were included had also good transmittance, and the metal oxide nanoparticles were dispersed well.

<Confirmation of moldability>

On a polyethylene terephthalate (PET) film, 0.01 mL of the active energy ray curable composition (HDDA-75) of Preparation Example 7 or the active energy ray curable composition (HDDA-0) of Comparative Preparation Example 1 was dripped, and the active energy ray curable composition on the PET film was sandwiched with a release layer-modified film mold having a microscopic convex-concave structure (moth eye) formed of a photocurable resin. The active energy ray curable composition was cured by performing light irradiation once using a conveyor-type ultraviolet irradiator (Eye Grandage ECS-401GX) at a speed of 98 cm/min. The mold was peeled off, thereby producing a molded product formed of the active energy ray cured product having the microscopic convex-concave structure (moth eye) at the surface.

Note that the mold having the depth of 160 nm or 400 nm was used.

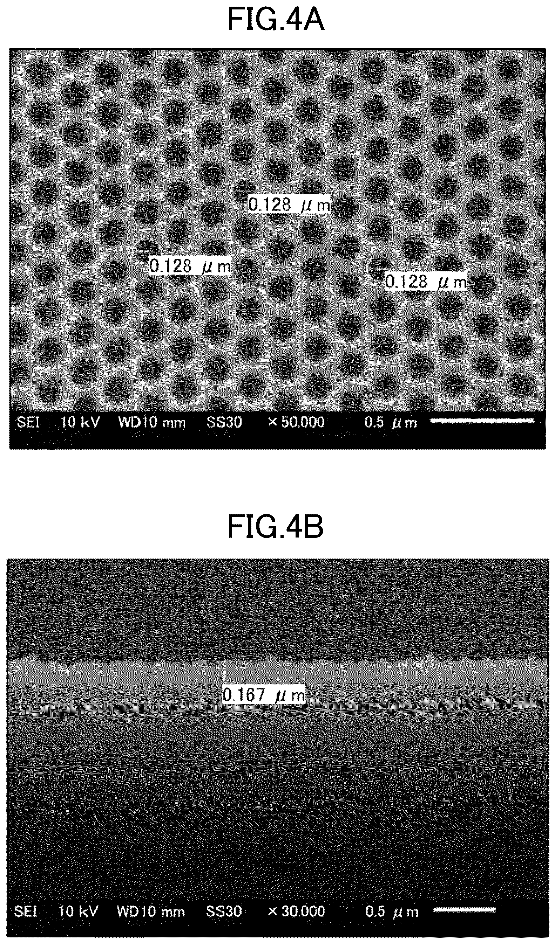

The results of observation of the surface (the surface that had been in contact with the mold) and cross-section (the thickness direction) of each of the obtained molded products under a scanning electron microscope (SEM) are presented in Figs. 4A to 4F.

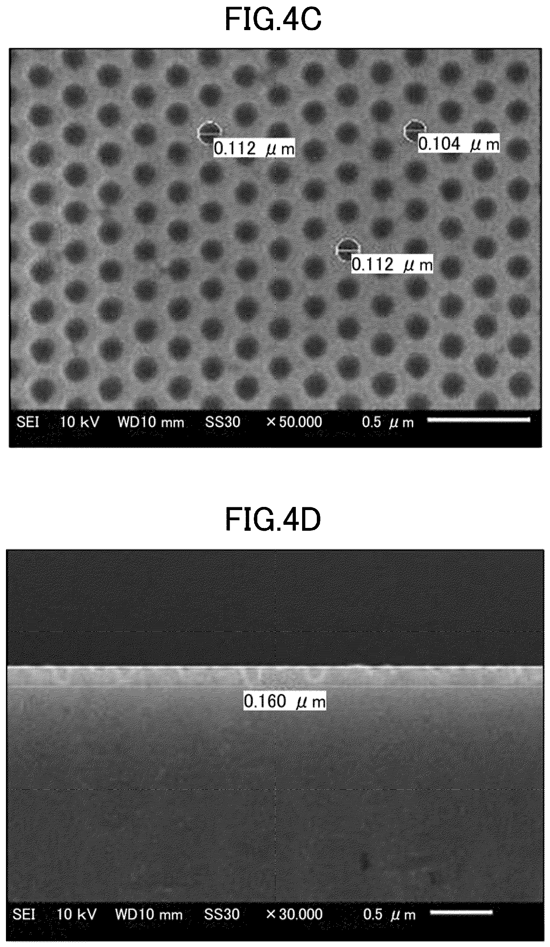

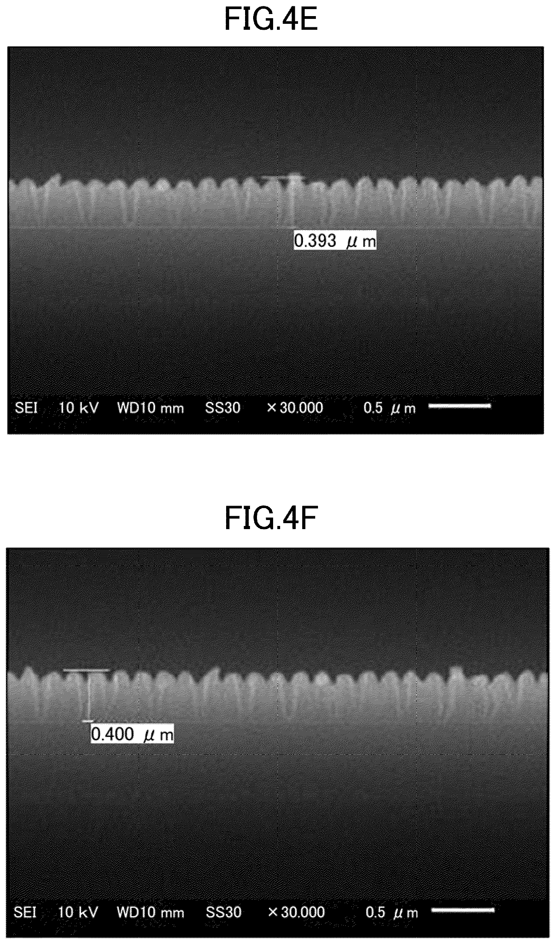

Fig. 4A is a top view illustrating the surface of the cured product of HDDA-0 molded using the mold having the depth of 160 nm. Fig. 4B is a cross-sectional view of the cured product of HDDA-0 molded using the mold having the depth of 160 nm. Fig. 4C is a top view illustrating the surface of the cured product of HDDA-75 molded using the mold having the depth of 160 nm. Fig. 4D is a cross-sectional view of the cured product of HDDA-75 molded using the mold having the depth of 160 nm. Fig. 4E is a cross-sectional view of the cured product of HDDA-0 molded using the mold having the depth of 400 nm. Fig. 4F is a cross-sectional view of the cured product of HDDA-75 molded using the mold having the depth of 400 nm.

It was demonstrated in Figs. 4A to 4F that formation of the moth-eye shape was observed, and a microscopic structure could be transferred to the curable composition including the metal oxide nanoparticles by photo nanoimprint molding, and easy processability was exhibited.

(Example 1: production of anti-reflection body 1)

On a high refractive index glass substrate (plano-convex lens 10-12 mm, material: N-SF5, refractive index at wavelength of 589 nm: 1.673, produced by Edmund Optics) subjected to gas-phase modification with a silane coupling agent (X-12-1048, produced by Shin-Etsu Chemical Co., Ltd.), 0.01 mL of the active energy ray curable composition (HDDA-70) of Preparation Example 6 was dripped. The active energy ray curable composition on the glass substrate was sandwiched with a release layer-modified film mold having a microscopic convex-concave structure (moth eye) having a depth of 160 nm. The active energy ray curable composition was cured by performing light irradiation once using a conveyor-type ultraviolet irradiator (Eye Grandage ECS-401GX) at a speed of 98 cm/min. The mold was peeled off, thereby producing an anti-reflection body 1 including the active energy ray cured product (HDDA-70) having the microscopic convex-concave structure equivalent to the structure obtained at the surface of the high refractive index glass substrate in <Confirmation of moldability>.

(Comparative Example 1: production of anti-reflection body 2)

An anti-reflection body 2 including the active energy ray cured product (HDDA-0) having the microscopic convex-concave structure equivalent to the structure obtained at the surface of the high refractive index glass substrate in <Confirmation of moldability> was obtained in the same manner as in Example 1, except that the active energy ray curable composition was changed from the active energy ray curable composition (HDDA-70) of Preparation Example 6 to the active energy ray curable composition (HDDA-0) of Comparative Preparation Example 1.

(Example 2: production of anti-reflection body 3)

An anti-reflection body 3 including the active energy ray cured product (HDDA-79) having the microscopic convex-concave structure equivalent to the structure obtained at the surface of the high refractive index glass substrate in <Confirmation of moldability> was obtained in the same manner as in Example 1, except that the substrate was changed from the high refractive index glass substrate (plano-convex lens 10-12 mm, material: N-SF5, refractive index at wavelength of 589 nm: 1.673, produced by Edmund Optics) to a high refractive index glass substrate (plano-convex lens 10-12 mm, material: N-SF11, refractive index at wavelength 589 nm: 1.784, produced by Edmund Optics), and the active energy ray curable composition was changed from the active energy ray curable composition (HDDA-70) of Preparation Example 6 to the active energy ray curable composition (HDDA-79) of Preparation Example 8.

(Comparative Example 2: production of anti-reflection body 4)

An anti-reflection body 4 including the active energy ray cured product (HDDA-0) having the microscopic convex-concave structure equivalent to the structure obtained at the surface of the high refractive index glass substrate in <Confirmation of moldability> was obtained in the same manner as in Example 2, except that the active energy ray curable composition was changed from the active energy ray curable composition (HDDA-79) of Preparation Example 8 to the active energy ray curable composition (HDDA-0) of Comparative Preparation Example 1.

(Example 3: production of anti-reflection body 5)

An anti-reflection body 5 including the active energy ray cured product (HDDA-79) having the microscopic convex-concave structure equivalent to the structure obtained at the surface of the high refractive index glass substrate in <Confirmation of moldability> was obtained in the same manner as in Example 1, except that the substrate was changed from the high refractive index glass substrate (plano-convex lens 10-12 mm, material: N-SF5, refractive index at wavelength of 589 nm: 1.673, produced by Edmund Optics) to a high refractive index glass substrate (flat plate, material: S-LAH53, refractive index at wavelength of 589 nm: 1.806, produced by OHARA INC.), and the active energy ray curable composition was changed from the active energy ray curable composition (HDDA-70) of Preparation Example 6 to the active energy ray curable composition (HDDA-79) of Preparation Example 8.

(Comparative Example 3: production of anti-reflection body 6)

An anti-reflection body 6 including the active energy ray cured product (HDDA-0) having the microscopic convex-concave structure equivalent to the structure obtained at the surface of the high refractive index glass substrate in <Confirmation of moldability> was obtained in the same manner as in Example 3, except that the active energy ray curable composition was changed from the active energy ray curable composition (HDDA-79) of Preparation Example 8 to the active energy ray curable composition (HDDA-0) of Comparative Preparation Example 1.

<Measurement of reflectance>

Reflection spectra of the anti-reflection bodies 1 to 6 of Examples 1 to 3 and Comparative Examples 1 to 3 at wavelengths of 380 nm to 1,050 nm were obtained by a near infrared spectrometer (USPM-RU-W, produced by Olympus Corporation), thereby measuring reflectance at each wavelength.

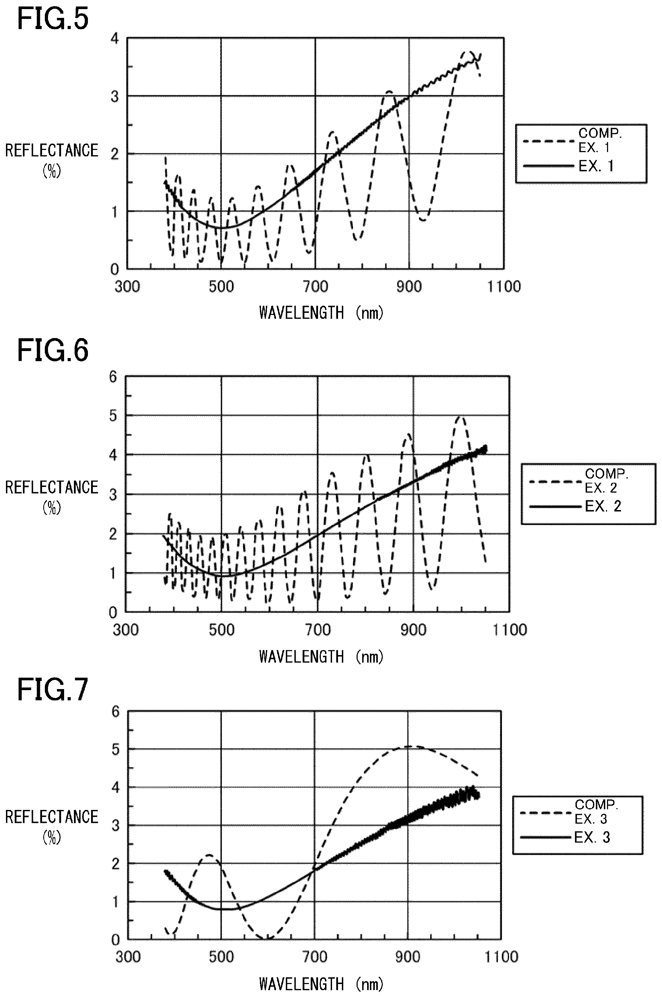

Fig. 5A is a diagram depicting reflection spectra of light reflected at the two interfaces that are the interface between the air and the active energy ray cured product and the interface between the active energy ray cured product and the substrate in the anti-reflection body 1 of Example 1 and in the anti-reflection body 2 of Comparative Example 1. The average value of the reflectance of the anti-reflection body 1 of Example 1 at the wavelengths of 400 nm to 700 nm was 1.04. The average value of the reflectance of the anti-reflection body 2 of Comparative Example 1 at the wavelengths of 400 nm to 700 nm was 0.82.

Fig. 6 is a diagram depicting reflection spectra of light reflected at the two interfaces that are the interface between the air and the active energy ray cured product and the interface between the active energy ray cured product and the substrate in the anti-reflection body 3 of Example 2 and in the anti-reflection body 4 of Comparative Example 2. The average value of the reflectance of the anti-reflection body 1 of Example 2 at the wavelengths of 400 nm to 700 nm was 1.26. The average value of the reflectance of the anti-reflection body 4 of Comparative Example 2 at the wavelengths of 400 nm to 700 nm was 1.36.

Fig. 7 is a diagram depicting reflection spectra of light reflected at the two interfaces that are the interface between the air and the active energy ray cured product and the interface between the active energy ray cured product and the substrate in the anti-reflection body 5 of Example 3 and in the anti-reflection body 6 of Comparative Example 3. The average value of the reflectance of the anti-reflection body 5 of Example 3 at the wavelengths of 400 nm to 700 nm was 1.14. The average value of the reflectance of the anti-reflection body 6 of Comparative Example 3 at the wavelengths of 400 nm to 700 nm was 1.86.

According to the results of Figs. 5 to 7, the anti-reflection bodies of Examples 1 to 3 could suitably inhibit undesired reflected light (interference light) by modulating the refractive index of the cured product of the active energy ray curable composition including the metal oxide nanoparticles.

Further, according to the results of Figs. 5 to 7, the values of the reflectance of Examples 2 and 3 at the wavelengths of 400 nm to 700 nm were lower than the values of the reflectance of Comparative Examples 2 and 3 at the wavelengths of 400 nm to 700 nm.

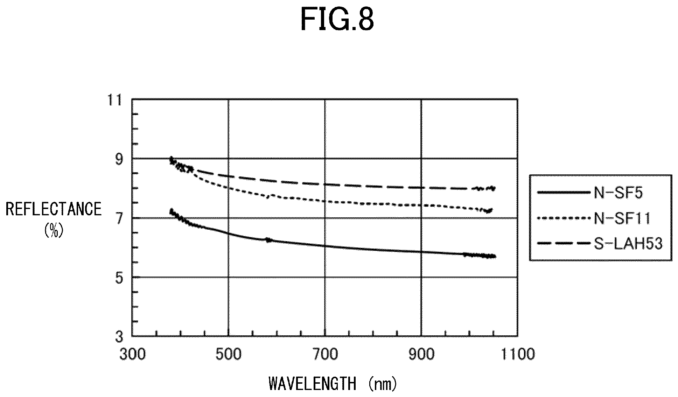

Note that the reflection spectra of the substrates (material: N-SF5, N-SF11, and S-LAH53) used in the anti-reflection bodies 1 to 6 of Examples 1 to 3 and Comparative Examples 1 to 3 are as depicted in Fig. 8.

The present application claims priority based on Japanese Patent Application No. 2022-194911, filed on December 6, 2022, the entire content of which are incorporated herein by reference.

**Claims**

1. An anti-reflection body comprising:

   a substrate having a refractive index of 1.60 to 1.90 at a wavelength of 589 nm; and
   a cured product of a curable composition disposed on the substrate, the curable composition including metal oxide nanoparticles, one or more polymerizable monomers, and a photopolymerization initiator,

   wherein the cured product has a microscopic convex-concave structure.

2. The anti-reflection body according to claim 1,
   wherein the one or more polymerizable monomers include a polyfunctional (meth)acrylate monomer.

3. The anti-reflection body according to claim 1 or 2,
   wherein the one or more polymerizable monomers include a polyfunctional (meth)acrylate monomer and a monofunctional (meth)acrylic monomer.

4. The anti-reflection body according to any one of claims 1 to 3,
   wherein the metal oxide nanoparticles have a media diameter (D50) of 1 nm or greater and 100 nm or less.

5. The anti-reflection body according to any one of claims 1 to 4,
   wherein an amount of the metal oxide nanoparticles in the curable composition is 50 percent by mass or greater and 80 percent by mass or less relative to a total amount of the one or more polymerizable monomers and the metal oxide nanoparticles.

6. The anti-reflection body according to any one of claims 1 to 5,
   wherein the substrate includes glass.

7. The anti-reflection body according to any one of claims 1 to 6,
   wherein an absolute value $|n_1-n_2|$ of a difference in a refractive index between a refractive index $n_1$ of the substrate at a wavelength of 589 nm and a refractive index $n_2$ of the cured product at a wavelength of 589 nm is 0.10 or less.

8. The anti-reflection body according to any one of claims 1 to 7,
   wherein a refractive index $n_1$ of the substrate at a wavelength of 589 nm and a refractive index $n_2$ of the cured product at a wavelength of 589 nm satisfy $n_1 > n_2$.

9. The anti-reflection body according to any one of claims 3 to 8,
   wherein a mass ratio $(C_1:C_2)$ of an amount $C_1$ of the polyfunctional (meth)acrylate monomer to an amount $C_2$ of the monofunctional (meth)acrylic monomer is 1:99 to 99:1.

10. An optical element comprising:
    the anti-reflection body of any one of claims 1 to 9.

# FIG.1A

# FIG.1B

## FIG.2A

## FIG.2B

## FIG.3

# FIG.4A

SEI    10 kV    WD10 mm    SS30    ×50.000    0.5 μm

0.128 μm
0.128 μm
0.128 μm

# FIG.4B

SEI    10 kV    WD10 mm    SS30    ×30.000    0.5 μm

0.167 μm

# FIG.4C

# FIG.4D

# FIG.4E

0.393 $\mu$m

SEI   10 kV   WD10 mm   SS30   ×30.000   0.5 $\mu$m

# FIG.4F

0.400 $\mu$m

SEI   10 kV   WD10 mm   SS30   ×30.000   0.5 $\mu$m

FIG.5

REFLECTANCE (%)

WAVELENGTH (nm)

COMP. EX. 1
EX. 1

FIG.6

REFLECTANCE (%)

WAVELENGTH (nm)

COMP. EX. 2
EX. 2

FIG.7

REFLECTANCE (%)

WAVELENGTH (nm)

COMP. EX. 3
EX. 3

# FIG.8

## INTERNATIONAL SEARCH REPORT

| International application No. |
|---|
| **PCT/JP2023/042663** |

**A.    CLASSIFICATION OF SUBJECT MATTER**

*G02B 1/118*(2015.01)i

FI:   G02B1/118

According to International Patent Classification (IPC) or to both national classification and IPC

**B.    FIELDS SEARCHED**

Minimum documentation searched (classification system followed by classification symbols)

G02B1/118

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2009-31764 A (MITSUBISHI RAYON CO LTD) 12 February 2009 (2009-02-12) paragraphs [0004], [0017] | 1, 6-8, 10 |
| Y | | 2-5, 9 |
| Y | JP 2015-200805 A (CANON DENSHI KK) 12 November 2015 (2015-11-12) paragraphs [0012]-[0026] | 1-10 |
| Y | WO 2008/096872 A1 (MITSUBISHI RAYON CO LTD) 14 August 2008 (2008-08-14) claims, paragraphs [0037]-[0047] | 1-10 |
| A | JP 2013-7905 A (ASAHI KASEI CORP) 10 January 2013 (2013-01-10) paragraphs [0045], [0048]-[0049], [0061]-[0062] | 1-10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 January 2024** | **30 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2023/042663**

| Patent document cited in search report | Publication date (day/month/year) | Patent family member(s) | Publication date (day/month/year) |
|---|---|---|---|
| JP 2009-31764 A | 12 February 2009 | (Family: none) | |
| JP 2015-200805 A | 12 November 2015 | (Family: none) | |
| WO 2008/096872 A1 | 14 August 2008 | US 2010/0323165 A1 claims, paragraphs [0052]-[0062] EP 2128659 A1 KR 10-2009-0119967 A CN 101663600 A | |
| JP 2013-7905 A | 10 January 2013 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6432134 B

- JP 2022194911 A